# EUROPEAN PATENT APPLICATION

(11) **EP 4 601 224 A1**
(43) Date of publication of application: **13.08.2025**
(21) Application number: 23893815.3
(22) Date of filing: 21.11.2023
(51) Int. Cl.: H04L 1/00

(54) **DATA MAPPING METHOD, DATA DE-MAPPING METHOD, AND RELATED DEVICE**

(30) Priority: 22.11.2022 CN 202211465674; 02.12.2022 CN 202211536901
(71) Applicant: Huawei Technologies Co., Ltd., Shenzhen, Guangdong 518129 (CN)
(72) Inventor: SU, Wei, Shenzhen, Guangdong 518129 (CN); SUN, Liang, Shenzhen, Guangdong 518129 (CN); ZHENG, Shuqian, Shenzhen, Guangdong 518129 (CN)
(74) Representative: Huawei European IPR
(86) International application number: PCT/CN2023/132851
(87) International publication number: WO 2024/109725

(57) **Abstract**

This application provides a data mapping method, applied to the communication field. The data mapping method includes the following steps: A sending device obtains a plurality of data coding blocks. The sending device maps the plurality of data coding blocks to a valid payload area of a service frame. A size of the valid payload area of the service frame is equal to a size of the plurality of data coding blocks. The sending device maps the service frame to a payload area of a data frame. The sending device sends the data frame. By designing the size of the valid payload area of the service frame, the technical solutions disclosed in this application can reduce device processing complexity, and meet related operation, administration and maintenance performance required when a low-rate service is carried by using the service frame.

## Description

This application claims priority to Chinese Patent Application No. 202211465674.X, filed with the China National Intellectual Property Administration on November 22, 2022 and entitled "DATA MAPPING METHOD, DATA DEMAPPING METHOD, AND RELATED DEVICE", and claims priority to Chinese Patent Application No. 202211536901.3, filed with the China National Intellectual Property Administration on December 2, 2022, and entitled "DATA MAPPING METHOD, DATA DEMAPPING METHOD, AND RELATED DEVICE", which are incorporated herein by reference in their entireties.

### TECHNICAL FIELD

This application relates to the communication field, and in particular, to a data mapping method, a data demapping method, and a related device.

### BACKGROUND

Due to features such as a high bandwidth, a large capacity, high reliability, and a low delay, an optical transport network (optical transport network, OTN) has become a mainstream technology used in a transport network. The OTN can provide high bandwidth transmission capabilities such as n*1.25 gigabits per second (gigabits per second, Gbps) and n*5 Gbps. To enable the OTN to provide a low bandwidth transmission capability down to megabits per second (megabits per second, Mbps), an optical service unit (optical service unit, OSU) frame may be mapped to an OTN frame. A structure of the OSU frame is related to operation, administration and maintenance (operation, administration and maintenance, OAM) performance (for example, alarm generation time and protection switching time) of the OTN.

Therefore, designing an OSU frame that can improve OAM performance is an urgent problem to be resolved.

### SUMMARY

This application provides a data mapping method, a data demapping method, and a related device. A size of a valid payload area of a service frame is designed, so that efficiency of determining a boundary of a data coding block by a receiving device can be improved, thereby improving OAM performance.

A first aspect of this application provides a data mapping method. The data mapping method includes the following plurality of steps. A sending device obtains a plurality of data coding blocks. The sending device may be an OTN device, a metro transport network (metro transport network, MTN) device, or the like. The sending device maps the plurality of data coding blocks to a valid payload area of a service frame. The service frame may be a service subframe or a multiframe including a plurality of service subframes. The service subframe may be an optical service unit (optical service unit, OSU) frame or another data frame whose structure is similar to a structure of the OSU frame. A size of the valid payload area of the service frame may be less than or equal to a size of a payload area of the service frame. When the size of the valid payload area of the service frame is less than the size of the payload area of the service frame, the payload area of the service frame further includes a padding payload area. The padding payload area is used to pad unwanted data. The size of the valid payload area of the service frame is equal to a size of the plurality of data coding blocks. The sending device maps the service frame to a payload area of a data frame. The data frame may be an OTN frame, a flexible Ethernet (flexible Ethernet, FlexE) frame, an MTN frame, or the like. The sending device sends the data frame.

In this application, the size of the plurality of data coding blocks is equal to the size of the valid payload area. A location of the valid payload area in the service frame is fixed. Therefore, after determining a start boundary of the service frame, a receiving device determines a boundary of the data coding block. Therefore, in this application, efficiency of determining the boundary of the data coding block can be improved, thereby improving OAM performance.

In an optional manner of the first aspect, a size of the service frame is an integer multiple of 16 bytes. When the payload area of the data frame is divided into a plurality of slots, and an interleaved size of each slot is 16 bytes, the service frame occupies an integer quantity of slots. In this case, the receiving device can improve efficiency of determining the start boundary of the service frame.

In an optional manner of the first aspect, the size of the valid payload area of the service frame is an integer multiple of 16 bytes. A size of an overhead area of the service frame is an integer multiple of 16 bytes. When a slot interleaving granularity of the data frame is 16 bytes, the valid payload area and the overhead area of the service frame each occupy an integer quantity of slots, so as to reduce complexity of processing the OSU frame.

In an optional manner of the first aspect, a size of each of M data coding blocks is 66 bits.

In an optional manner of the first aspect, the size of the service frame is 4*1064 bytes. The size of the valid payload area of the service frame is 4*1056 bytes. The size of the overhead area of the service frame is 4*8 bytes. In this application, when the size of the data coding block is 66 bits, the entire payload area of the service frame may be used to carry the data coding block, so as to improve transmission efficiency. In another optional manner of the first aspect, the size of the service frame is 4*1328 bytes. The size of the valid payload area of the service frame is 4*1320 bytes. The size of the overhead area of the service frame is 4*8 bytes. In this application, when the size of the data coding block is 66 bits, the entire payload area of the service frame may be used to carry the data coding block, so as to improve transmission efficiency.

In an optional manner of the first aspect, a size of each of M data coding blocks is 257 bits. Compared with a 66-bit coding block, a 257-bit coding block can further improve carrying efficiency.

In an optional manner of the first aspect, the size of the service frame is 4*1036 bytes. The size of the valid payload area of the service frame is 4*1028 bytes. The size of the overhead area of the service frame is 4*8 bytes. In this application, when the size of the data coding block is 257 bits, the entire payload area of the service frame may be used to carry the data coding block, so as to improve transmission efficiency. In another optional manner of the first aspect, the size of the service frame is 4*1293 bytes. The size of the valid payload area of the service frame is 4*1258 bytes. The size of the overhead area of the service frame is 4*8 bytes. In this application, when the size of the data coding block is 257 bits, the entire payload area of the service frame may be used to carry the data coding block, so as to improve transmission efficiency.

In an optional manner of the first aspect, the overhead area of the service frame includes a plurality of different frame header indication overhead fields. The frame header indication overhead field is added, so that the efficiency of determining the start boundary of the service frame can be improved.

In an optional manner of the first aspect, each of the plurality of frame header indication overhead fields includes a frame header indication identification field and a first field. The first field represents a ranking of each frame header indication overhead field in the plurality of frame header indication overhead fields. The first field is added, so that the efficiency of determining the start boundary of the service frame can be improved.

In an optional manner of the first aspect, a quantity of the plurality of frame header indication overhead fields is a quantity of rows of the overhead area of the service frame.

In an optional manner of the first aspect, the overhead area of the service frame includes a delay measurement (delay measurement, DM) overhead field. A size of the DM overhead field is 16 bits. The size of the DM overhead field is increased, so that more timestamp information can be transmitted. Therefore, in this application, delay measurement precision can be improved.

In an optional manner of the first aspect, the overhead area of the service frame includes a justification control (justification control, JC) overhead field. A size of the JC overhead field is 4 bytes. The size of the JC overhead field is reduced, so that a size of an overhead that needs to be transmitted can be reduced, thereby improving transmission efficiency.

In an optional manner of the first aspect, the overhead area of the service frame includes a path monitoring (path monitoring, PM) automatic protection switching (automatic protection switching, APS) overhead field and a tandem connection monitoring (tandem connection monitoring, TCM) APS overhead field. The PM APS overhead field and the TCM APS overhead field are transmitted in one data frame, so that a fault handling speed can be improved.

In an optional manner of the first aspect, the size of the service frame is less than or equal to a size of the payload area of the data frame.

In an optional manner of the first aspect, the service frame is an OSU frame. The data frame is an OTN frame.

In an optional manner of the first aspect, the overhead area of the service frame includes a plurality of sub-overhead areas. The payload area of the service frame includes a plurality of sub-payload areas. A sub-overhead area in the plurality of sub-overhead areas and a sub-payload area in the plurality of sub-payload areas are alternately distributed. Each of the plurality of sub-overhead areas includes a target overhead field. The target overhead fields are set in the plurality of sub-overhead areas, so that a frequency of transmitting the target overhead field can be increased, thereby improving OAM performance.

In an optional manner of the first aspect, the target overhead field includes a frame header indication overhead field and/or an accumulated delay overhead field. When the target overhead field includes the frame header indication overhead field, the efficiency of determining the start boundary of the service frame can be improved. When the target overhead field includes the accumulated delay overhead field, clock recovery performance of the receiving device can be improved.

In an optional manner of the first aspect, a size of a sub-payload area between any two adjacent sub-overhead areas in the plurality of sub-overhead areas is an integer multiple of 8 bytes or 16 bytes. The size of the sub-payload area is set, so that a specific processing capability can be maintained, and processing complexity can also be reduced.

In an optional manner of the first aspect, the service frame is a multiframe including N service subframes. N is an integer greater than 1. A multiframe including a plurality of service subframes is used to carry data. This can improve carrying efficiency.

In an optional manner of the first aspect, N is 4. A size of the N service subframes is 4*3824 bytes. When a size of the multiframe including the N service subframes is 4*3824 bytes, a structure of the multiframe is consistent with a structure of the OTN frame. Therefore, in this application, complexity of processing the multiframe by the receiving device can be reduced.

In an optional manner of the first aspect, a size of each of the plurality of sub-overhead areas is an integer multiple of 8 bytes or 16 bytes. The size of each sub-overhead area is set, so that processing complexity can be reduced.

In an optional manner of the first aspect, a size occupied by each of the N service subframes in each sub-overhead area is an integer multiple of 8 bytes or 16 bytes. The size occupied by each service subframe in each sub-overhead area is set, so that processing complexity can be reduced.

In an optional manner of the first aspect, a quantity of the plurality of sub-overhead areas is 2. The quantity of sub-overhead areas is increased, so that the frequency of transmitting the target overhead field can be increased, thereby improving OAM performance. However, introduction of excessive sub-overhead areas also increases complexity of processing the service frame by the receiving device, resulting in reduction of OAM performance. When the quantity of the plurality of sub-overhead areas is 2, appropriate OAM performance can be provided.

In an optional manner of the first aspect, each of the plurality of sub-overhead areas includes N target overhead fields. The N target overhead fields are in one-to-one correspondence with the N service subframes. The frequency of transmitting the target overhead field is increased, so that OAM performance can be improved.

A second aspect of this application provides a data demapping method. The data demapping method includes the following steps: A receiving device receives a data frame from a sending device. The receiving device may be an OTN device, an MTN device, or the like. The data frame may be an OTN frame, a FlexE frame, or an MTN frame. The receiving device extracts a service frame from a payload area of the data frame. The service frame may be an OSU frame or another data frame whose structure is similar to a structure of the OSU frame. The receiving device extracts a plurality of data coding blocks from a valid payload area of the service frame. A size of the valid payload area of the service frame is equal to a size of the plurality of data coding blocks.

In an optional manner of the second aspect, an overhead area of the service frame includes a plurality of different frame header indication overhead fields. The data demapping method further includes: The receiving device determines a start boundary of the service frame based on the plurality of frame header indication overhead fields.

In an optional manner of the second aspect, the overhead area of the service frame includes a DM overhead field. A size of the DM overhead field is 8 bits. The data demapping method includes the following step: The receiving device determines a delay between the receiving device and the sending device based on the DM overhead field.

It should be understood that descriptions of the second aspect have a similar part to the descriptions of the first aspect. Therefore, for the descriptions of the second aspect, refer to the descriptions in any optional manner of the first aspect.

A third aspect of this application provides a data mapping method. The data mapping method includes the following plurality of steps. A sending device obtains a plurality of data coding blocks. The sending device maps the plurality of data coding blocks to a valid payload area of a service frame. An overhead area of the service frame includes a plurality of sub-overhead areas. A payload area of the service frame includes a plurality of sub-payload areas. A sub-overhead area in the plurality of sub-overhead areas and a sub-payload area in the plurality of sub-payload areas are alternately distributed. Each of the plurality of sub-overhead areas includes a target overhead field. A size of the valid payload area of the service frame is less than or equal to a size of the plurality of sub-payload areas.

It should be understood that descriptions of the third aspect have a similar part to the descriptions of the first aspect. Therefore, for the descriptions of the third aspect, refer to the descriptions in the first aspect or any optional manner of the first aspect.

A fourth aspect of this application provides a communication system. The communication system includes a sending device and a receiving device. The sending device is configured to obtain a plurality of data coding blocks, and map the plurality of data coding blocks to a valid payload area of a service frame. A size of the valid payload area of the service frame is equal to a size of the plurality of data coding blocks. The sending device is further configured to map the service frame to a payload area of a data frame, and send the data frame. The receiving device is configured to receive the data frame from the sending device and extract the service frame from the payload area of the data frame. The receiving device is further configured to extract the plurality of data coding blocks from the valid payload area of the service frame.

In an optional manner of the fourth aspect, the sending device is further configured to perform the method according to the first aspect, the third aspect, or any optional manner of the first aspect, and/or the receiving device is further configured to perform the method according to the second aspect or any optional manner of the second aspect.

A fifth aspect of this application provides a service frame. The service frame includes an overhead area and a valid payload area. The valid payload area is used to carry a plurality of data coding blocks. A size of the valid payload area of the service frame is equal to a size of the plurality of data coding blocks.

In an optional manner of the fifth aspect, the service frame further includes content in any optional manner of the first aspect.

A sixth aspect of this application provides a data frame. The data frame includes an overhead area and a payload area. The payload area of the data frame is used to carry one or more service frames according to the fifth aspect or any optional manner of the fifth aspect.

A seventh aspect of this application provides a sending device. The sending device includes an obtaining module, a mapping module, and a sending module. The obtaining module is configured to obtain a plurality of data coding blocks. The mapping module is configured to perform the method according to the first aspect, the third aspect, or any optional manner of the first aspect, to obtain a data frame based on the plurality of data coding blocks. The sending module is configured to send the data frame.

An eighth aspect of this application provides a receiving device. The receiving device includes a receiving module and an extraction module. The receiving module is configured to receive a data frame from a sending device. The extraction module is configured to perform the method according to the second aspect or any optional manner of the second aspect, to obtain a plurality of data coding blocks based on the data frame.

A ninth aspect of this application provides a sending device. The sending device includes a processor and a transceiver. The processor is configured to perform the method according to the first aspect, the third aspect, or any optional manner of the first aspect or the third aspect, to obtain a data frame. The transceiver is configured to send the data frame.

A tenth aspect of this application provides a receiving device. The receiving device includes a processor and a transceiver. The transceiver is configured to receive a data frame. The processor is configured to perform the method according to the second aspect or any optional manner of the second aspect, to obtain a plurality of data coding blocks based on the data frame.

An eleventh aspect of this application provides a computer storage medium. The computer storage medium stores instructions, and when the instructions are executed on a computer, the computer is enabled to perform the method according to the first aspect, the third aspect, or any implementation of the first aspect; or the computer is enabled to perform the method according to the second aspect or any implementation of the second aspect.

A twelfth aspect of this application provides a computer program product. When the computer program product is executed on a computer, the computer is enabled to perform the method according to the first aspect, the third aspect, or any implementation of the first aspect; or the computer is enabled to perform the method according to the second aspect or any implementation of the second aspect.

### BRIEF DESCRIPTION OF DRAWINGS

FIG. 1 is a schematic diagram of a structure of an OTN;
FIG. 2 is a schematic diagram of a structure of an OTN device;
FIG. 3 is a schematic diagram of mapping an OSU frame to an OTN frame;
FIG. 4 is a schematic diagram of a first structure of an OSU frame according to an embodiment of this application;
FIG. 5 is a schematic diagram of a second structure of an OSU frame according to an embodiment of this application;
FIG. 6 is a schematic diagram of a first structure of an overhead area of an OSU frame according to an embodiment of this application;
FIG. 7 is a schematic diagram of a second structure of an overhead area of an OSU frame according to an embodiment of this application;
FIG. 8 is a schematic diagram of a structure of a frame header indication overhead field according to an embodiment of this application;
FIG. 9 is a schematic diagram of a third structure of an overhead area of an OSU frame according to an embodiment of this application;
FIG. 10 is a schematic diagram of a fourth structure of an overhead area of an OSU frame according to an embodiment of this application;
FIG. 11 is a schematic diagram of a fifth structure of an overhead area of an OSU frame according to an embodiment of this application;
FIG. 12 is a schematic diagram of a sixth structure of an overhead area of an OSU frame according to an embodiment of this application;
FIG. 13 is a schematic diagram of a third structure of an OSU frame according to an embodiment of this application;
FIG. 14 is a schematic diagram of a first structure of a first sub-overhead area according to an embodiment of this application;
FIG. 15 is a schematic diagram of a first structure of a second sub-overhead area according to an embodiment of this application;
FIG. 16 is a schematic diagram of a fourth structure of an OSU frame according to an embodiment of this application;
FIG. 17 is a schematic diagram of a second structure of a first sub-overhead area according to an embodiment of this application;
FIG. 18 is a schematic diagram of a second structure of a second sub-overhead area according to an embodiment of this application;
FIG. 19 is a schematic flowchart of a data mapping method according to an embodiment of this application;
FIG. 20 is a schematic flowchart of a data demapping method according to an embodiment of this application;
FIG. 21 is a schematic diagram of a structure of a sending device according to an embodiment of this application;
FIG. 22 is a schematic diagram of a structure of a receiving device according to an embodiment of this application;
FIG. 23 is a schematic diagram of a structure of a communication device according to an embodiment of this application; and
FIG. 24 is a schematic diagram of a structure of a communication system according to an embodiment of this application.

### DESCRIPTION OF EMBODIMENTS

Some terms in this application are first described, so as to help a person skilled in the art have a better understanding.
(1) "A plurality of" means two or more. "And/or" describes an association relationship between associated objects, and three relationships may exist. For example, A and/or B may represent the following three cases: Only A exists, both A and B exist, and only B exists. In addition, in the descriptions of this application, words such as "first" and "second" are merely used for distinguishing descriptions, and cannot be understood as an indication or implication of relative importance, and cannot be understood as an indication or implication of a sequence.
(2) Mapping A to B mentioned in this application refers to encapsulating A into B. For example, mapping an optical service unit (optical service unit, OSU) frame to an optical transport network (optical transport network, OTN) frame refers to encapsulating an OSU frame or an OSU signal into an OTN frame.
(3) Unless otherwise specified, specific descriptions of some technical features in one embodiment may also be applied to explain corresponding technical features mentioned in another embodiment. For example, overheads and meanings included in a service frame in an embodiment may also be applied to a service frame mentioned in another embodiment. For another example, a specific example, a description, and the like of an optical transport network frame may be applied to optical transport network frames mentioned in different specific embodiments or specific examples used to replace optical transport network frames.

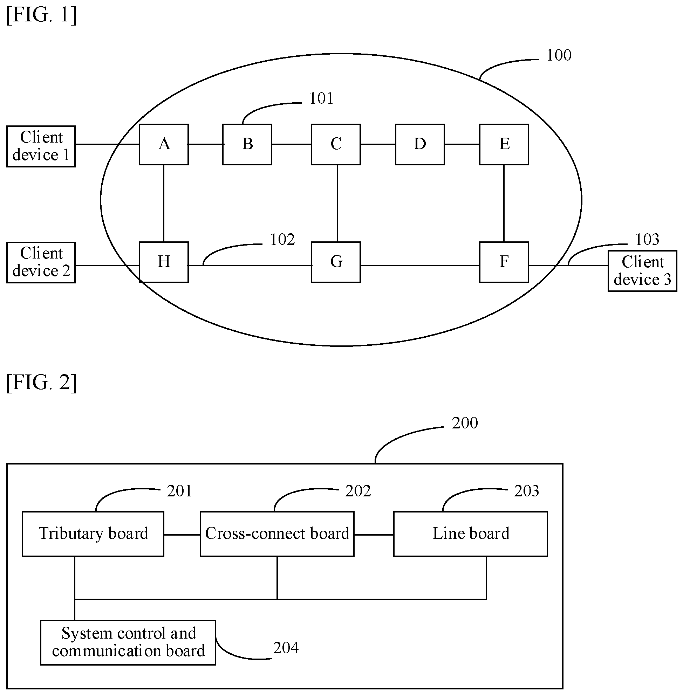

Embodiments of this application are applicable to an optical network such as an optical transport network or a metro transport network. The optical transport network includes an OTN or a flexible Ethernet (flexible Ethernet, FlexE). In subsequent descriptions of this application, an OTN is used as an example for description. One OTN is usually formed by connecting a plurality of OTN devices through optical fibers, and may have different topological types such as a line type, a ring type, and a mesh type based on specific requirements. FIG. 1 is a schematic diagram of a structure of an OTN. As shown in FIG. 1, the OTN 100 includes eight OTN devices 101, that is, OTN devices A to H. 102 indicates an optical fiber, configured to connect two devices. 103 indicates a client service interface, configured to receive or send client service data. As shown in FIG. 1, the OTN 100 is configured to transmit service data for client devices 1 to 3. The client device is connected to the OTN device through the client service interface. For example, in FIG. 1, the client devices 1 to 3 are respectively connected to the OTN devices A, H, and F.

Based on an actual requirement, one OTN device may have different functions. Generally, the OTN device includes an optical layer device, an electrical layer device, and a photoelectric hybrid device. The optical layer device is a device that can process an optical layer signal, for example, an optical amplifier (optical amplifier, OA) or an optical add-drop multiplexer (optical add-drop multiplexer, OADM). The OA is mainly configured to amplify an optical signal to support a longer transmission distance of the optical signal while ensuring specific performance of the optical signal. The OADM is configured to perform space transformation on the optical signal, so that the optical signal can be output from different output ports (also referred to as directions). The electrical layer device is a device that can process an electrical layer signal, for example, a device that can process an OTN signal. The photoelectric hybrid device is a device that has a capability of processing an optical layer signal and an electrical layer signal. It should be noted that, one OTN device may integrate a plurality of different functions based on a specific integration requirement. The technical solutions provided in this application are applicable to OTN devices that have different forms and degrees of integration and that include an electrical layer function.

It should be noted that a data frame structure used by an optical transport device in embodiments of this application may be an OTN frame. The OTN frame is used to carry various service data and provide rich management and monitoring functions. The OTN frame may be an optical data unit (optical data unit k, ODUk) frame, an ODUCn, an ODUflex, an optical channel transport unit k (optical transport unit k, OTUk), an OTUCn, a flexible OTN (FlexO) frame, or the like. A difference between an ODU frame and an OTU frame lies in that the OTU frame includes an ODU frame and an OTU overhead. k represents different rate levels. For example, k=1 indicates 2.5 Gbps, and k=4 indicates 100 Gbps. Cn represents a variable rate, and is specifically a rate that is a positive integer multiple of 100 Gbps. Unless otherwise specified, the ODU frame is any one of the ODUk, the ODUCn, or the ODUflex, and the OTU frame is any one of the OTUk, the OTUCn, or the FlexO. It should be further noted that with development of optical transport network technologies, a new type of OTN frame may be defined, and is also applicable to this application. In addition, a method disclosed in this application is also applicable to another optical transport network frame such as a FlexE frame.

FIG. 2 is a schematic diagram of a structure of an OTN device. The OTN device 200 may be any device of the OTN devices A to H in FIG. 1. As shown in FIG. 2, the OTN device 200 includes a tributary board 201, a cross-connect board 202, a line board 203, an optical layer processing board (not shown), and a system control and communication board 204.

The tributary board 201, the cross-connect board 202, and the line board 203 are configured to process electrical layer signals. The tributary board 201 is configured to receive and send various client services such as an SDH service, a packet service, an Ethernet service, and/or a fronthaul service. Further, the tributary board 201 may be divided into an optical transceiver module on a client side and a signal processor. The optical transceiver module on the client side may also be referred to as an optical transceiver, configured to receive and/or send service data. The signal processor is configured to map the service data to a data frame and demap the service data from the data frame. The cross-connect board 202 is configured to exchange data frames, to complete exchange of one or more types of data frames. The line board 203 mainly processes a data frame on a line side. Specifically, the line board 203 may be divided into an optical module on the line side and a signal processor. The optical module on the line side may be referred to as an optical transceiver, configured to receive and/or send a data frame. The signal processor is configured to multiplex and demultiplex the data frame on the line side, or map and demap the data frame on the line side. The system control and communication board 204 is configured to implement system control. Specifically, information may be collected from different boards, or a control instruction may be sent to a corresponding board. Unless otherwise specified, there may be one or more specific components (for example, signal processors). This is not limited in this application. It should be further noted that a type of a board included in the device, a function design of the board, and a quantity of boards are not limited in this application. It should be noted that in a specific implementation, two boards mentioned above may be designed as one board. In addition, a network device may further include a standby power supply, a heat dissipation fan, and the like.

It should be understood that FIG. 2 is merely an example of the OTN device provided in this application. The OTN device may include different types and different quantities of boards based on specific requirements. For example, an OTN device serving as a core node includes no tributary board 201. For another example, an OTN device serving as an edge node includes a plurality of tributary boards 201, or includes no optical cross-connect board 202. For still another example, an OTN device supporting only an electrical layer function may include no optical layer processing board.

It can be learned from the foregoing descriptions that, in this application, the OTN is used as an example to describe the method provided in this application. In this case, a service frame may be an OSU frame or a multiframe including a plurality of OSU frames. A data frame may be an OTN frame or an OPU frame. The following describes an example of a process in which the OTN device maps the OSU frame to the OTN frame.

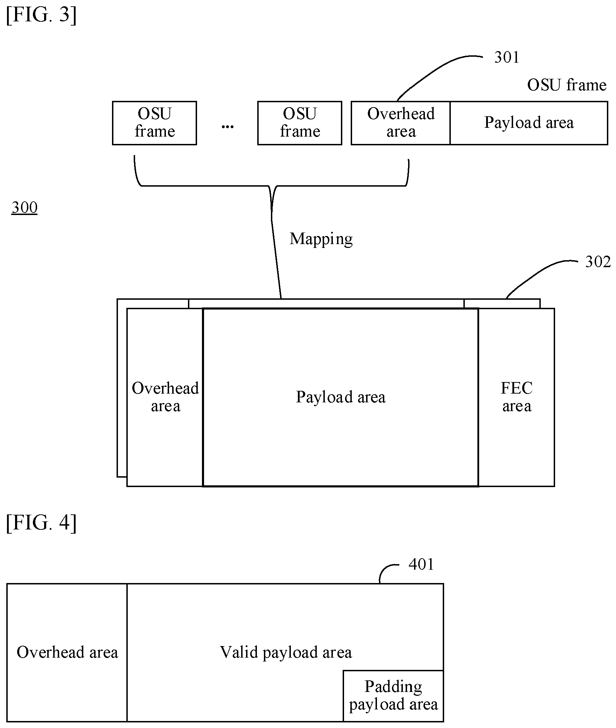

FIG. 3 is a schematic diagram of mapping an OSU frame to an OTN frame. As shown in FIG. 3, the OTN frame 302 has a structure of four rows and 3824 columns. The OTN frame 302 includes an overhead area, a payload area, and a forward error correction (forward error correction, FEC) area. It should be understood that the OTN frame 302 is merely an example. Another deformed OTN frame is also applicable to this application, for example, an OTN frame that does not include the FEC area; for another example, a frame structure in which a quantity of rows and a quantity of columns are different from those of the OTN frame 302.

One or more OSU frames are mapped to the payload area of the OTN frame. As shown in FIG. 3, the OSU frame 301 includes an overhead area and a payload area. The overhead area of the OSU frame 301 is used to carry overhead information. The overhead information includes one or more overhead fields. The payload area of the OSU frame 301 is used to carry service data. It should be understood that a structure of the OSU frame shown in FIG. 3 is merely an example. In another specific implementation, the OSU frame may alternatively be a data structure including an overhead subframe. This is not limited in this application.

During actual application, the structure of the OSU frame is related to operation, administration and maintenance (operation, administration and maintenance, OAM) performance of the OTN. Therefore, designing an OSU frame that can improve OAM performance is an urgent problem to be resolved.

In view of this, this application provides an OSU frame. FIG. 4 is a schematic diagram of a first structure of an OSU frame according to an embodiment of this application. As shown in FIG. 4, the OSU frame 401 includes an overhead area and a payload area. The payload area includes a valid payload area and a padding payload area. The valid payload area is used to carry a plurality of data coding blocks. A size of the valid payload area is equal to a size of the plurality of data coding blocks. The padding payload area is used to pad unwanted data. During actual application, to avoid transmission of much unwanted data, a size of the padding payload area may be less than a size of a single data coding block.

In this embodiment of this application, a location of the valid payload area in the OSU frame is fixed. To be specific, in two contiguous OSU frames transmitted by the OTN device, valid payload areas and padding payload areas have fixed sizes and locations. For example, the two contiguous OSU frames include a first OSU frame and a second OSU frame. In the first OSU frame and the second OSU frame, sizes of valid payload areas each are 1056 bytes, and sizes of padding payload areas each are 4 bytes. The valid payload area is located in bytes 33 to 1088 in the OSU frame. The padding payload area is located in bytes 1089 to 1092 in the OSU frame. When the location of the valid payload area in the OSU frame is fixed, a receiving device that processes the OSU frame may determine a boundary of a data coding block by determining a start boundary of the OSU frame. Therefore, in this embodiment of this application, efficiency of determining the boundary of the data coding block can be improved, thereby improving OAM performance.

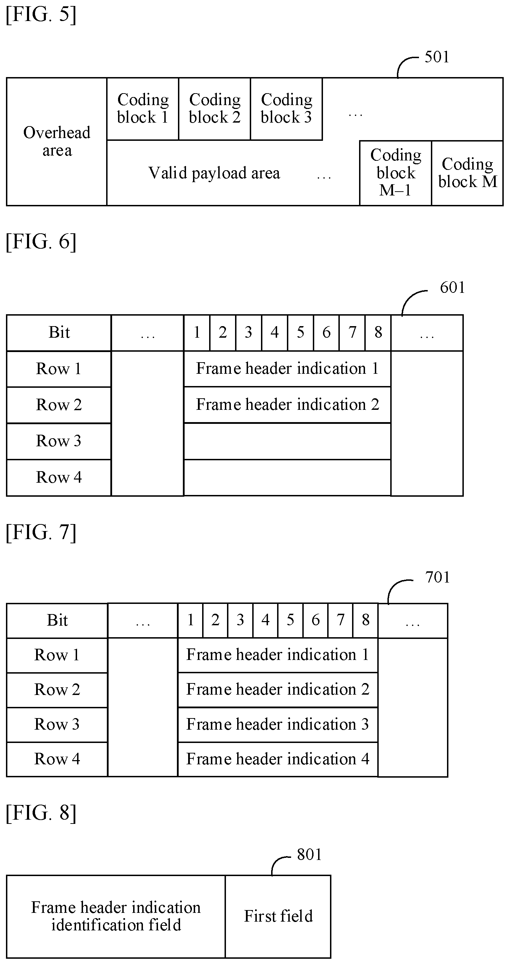

During actual application, the size of the valid payload area of the OSU frame may be equal to a size of the payload area of the OSU frame. In this case, the OSU frame includes no padding payload area. FIG. 5 is a schematic diagram of a second structure of an OSU frame according to an embodiment of this application. As shown in FIG. 5, the OSU frame 501 includes an overhead area and a valid payload area. The valid payload area is used to pad a plurality of data coding blocks. The data coding block may be referred to as a coding block for short. In the example of FIG. 5, a quantity of the plurality of data coding blocks is M. M is an integer greater than 1. In subsequent examples, an example in which a size of the valid payload area of the OSU frame is equal to a size of a payload area of the OSU frame is used for description.

It can be learned from the foregoing descriptions in FIG. 3 that the one or more OSU frames may be mapped to the payload area of the OTN frame. During actual application, the payload area of the OTN frame may be divided into a plurality of slots, and a size of each slot is 16 bytes. Therefore, when a size of the OSU frame is an integer multiple of 16 bytes, the OSU frame occupies an integer quantity of slots. In this case, the receiving device can improve efficiency of determining a start boundary of the OSU frame, thereby improving OAM performance.

During actual application, to facilitate determining a boundary between the overhead area and the valid payload area of the OSU frame, a size of the overhead area of the OSU frame may be an integer multiple of 16 bytes, for example, 16 bytes or 32 bytes. When the size of the OSU frame is an integer multiple of 16 bytes, the size of the valid payload area of the OSU frame is also an integer multiple of 16 bytes, for example, 4224 bytes or 5280 bytes.

It can be learned from the foregoing descriptions that the size of the valid payload area of the OSU frame is equal to the size of the plurality of data coding blocks. Therefore, the size of the OSU frame is related to the size of the data coding block. The following illustrates the size of the OSU frame by using an example in which the size of the data coding block is 66 bits or 257 bits.

When the size of the data coding block is 66 bits, the size of the OSU frame is 4*1064 bytes, where "4*1064" represents four rows and 1064 columns, the size of the valid payload area of the OSU frame is 4*1056 bytes, and the size of the overhead area of the OSU frame is 4*8 bytes. The valid payload area of the OSU frame may carry 512 66-bit data coding blocks. When a bit rate of the OSU frame is 10.4 Mbit/s, a frame period of the OSU frame is approximately equal to 3.27 ms. For an alarm indication signal (alarm indication signal, AIS), a lock (lock, LCK) signal, or the like that needs to be generated through filtering in three frame periods, a transmission periodicity is approximately 9.81 ms. During actual application, to ensure OAM performance, the transmission periodicity may be less than 15 ms. Therefore, when the size of the OSU frame is 4*1064 bytes, the OAM performance is relatively appropriate. In addition, as the bit rate of the OSU frame increases, the frame period of the OSU frame further decreases, and better OAM performance can be provided. Alternatively, when the size of the data coding block is 66 bits, the size of the OSU frame is 4*1328 bytes, the size of the valid payload area of the OSU frame is 4*1320 bytes, and the size of the overhead area of the OSU frame is 4*8 bytes. The valid payload area of the OSU frame may carry 640 66-bit data coding blocks. When the bit rate of the OSU frame is 10.4 Mbit/s, the frame period of the OSU frame is approximately equal to 4.09 ms. For the AIS, the LCK signal, or the like that needs to be generated through filtering in three frame periods, the transmission periodicity is approximately 12.27 ms. Therefore, when the size of the OSU frame is 4*1328 bytes, the OAM performance is relatively appropriate.

When the size of the data coding block is 257 bits, the size of the service frame is 4*1036 bytes, the size of the valid payload area of the service frame is 4*1028 bytes, and the size of the overhead area of the service frame is 4*8 bytes. The valid payload area of the OSU frame may carry 128 257-bit data coding blocks. When the bit rate of the OSU frame is 10.4 Mbit/s, the frame period of the OSU frame is approximately equal to 3.19 ms. For the AIS, the LCK signal, or the like that needs to be generated through filtering in three frame periods, the transmission periodicity is approximately 9.56 ms. Therefore, when the size of the OSU frame is 4*1036 bytes, the OAM performance is relatively appropriate. Alternatively, when the size of the data coding block is 257 bits, the size of the service frame is 4*1293 bytes, the size of the valid payload area of the service frame is 4*1258 bytes, and the size of the overhead area of the service frame is 4*8 bytes. The valid payload area of the OSU frame may carry 160 257-bit data coding blocks. When the bit rate of the OSU frame is 10.4 Mbit/s, the frame period of the OSU frame is approximately equal to 3.98 ms. For the AIS, the LCK signal, or the like that needs to be generated through filtering in three frame periods, the transmission periodicity is approximately 11.94 ms. Therefore, when the size of the OSU frame is 4*1293 bytes, the OAM performance is relatively appropriate.

When the size of the data coding block is 257 bits or 66 bits, the size of the service frame is 34,560 bytes, for example, 4*1080 bytes, the size of the payload area of the service frame is 34,304 bits, for example, 4*1072 bytes, the size of the valid payload area of the service frame is 33,924 bits, and the size of the padding payload area of the service frame is 380 bits. The valid payload area of the OSU frame may carry 514 66-bit data coding blocks or 132 257-bit data coding blocks. It should be understood that, in the foregoing example, the 380-bit padding payload area may also be used to carry one or more data coding blocks. For example, 380 bits are used to carry one 257-bit coding block. In this case, the size of the valid payload area of the service frame is 34,181 bits, and the size of the padding payload area of the service frame is 123 bits. The valid payload area of the OSU frame may carry 133 257-bit data coding blocks. Alternatively, 380 bits are used to carry five 66-bit coding blocks. In this case, the size of the valid payload area of the service frame is 34,254 bits, and the size of the padding payload area of the service frame is 50 bits. The valid payload area of the OSU frame may carry 519 66-bit data coding blocks.

During actual application, the receiving device that processes the OSU frame may determine the start boundary of the OSU frame by using a frame header indication overhead field. To improve efficiency of determining the start boundary of the OSU frame, the overhead area of the OSU frame may include a plurality of frame header indication overhead fields. FIG. 6 is a schematic diagram of a first structure of an overhead area of an OSU frame according to an embodiment of this application. As shown in FIG. 6, the overhead area 601 of the OSU frame has a structure of four rows and a plurality of columns. The overhead area 601 of the OSU frame includes two frame header indication overhead fields (namely, a frame header indication 1 and a frame header indication 2). The two frame header indication overhead fields may be located in a middle area of the overhead area 601 or at a middle location of each row. Sizes of the two frame header indication overhead fields each are 8 bits. In FIG. 6, a blank area is used to carry another overhead field. Specific content and a size of the another overhead field are not limited in this embodiment of this application. For example, the another overhead field includes one or more overhead fields in Table 1.

**Table 1**

| Name | Meaning |
|---|---|
| SID | Service identifier (service identifier, SID), identifying a service carried by an OSU frame |
| BIP | Bit-interleaved parity (bit-interleaved parity, BIP), for data check, for example, bit-interleaved parity-8 BIP8 |
| BEI | Backward error indication (backward error indication, BEI), indicating whether a bit error exists on a path in a receiving direction |
| BDI | Backward defect indication (backward defect indication, BDI), indicating whether a fault occurs on the path in the receiving direction |
| PM | Path monitoring (path monitoring, PM), for completing an end-to-end path monitoring function of an OSU frame, which may include one or more of a TTI, the BIP, the BEI, the BDI, or a STAT indication |
| TCM | Tandem connection monitoring (tandem connection monitoring, TCM) overhead, used to implement a TCM function of the OSU frame |
| STAT | Status (status, STAT) indication, identifying path status information, for example, an alarm indication signal or an idle signal indication that is transmitted downstream, where the STAT indication may include a PM STAT indication or a TCM STAT indication. |
| APS | Automatic protection switching (automatic protection switching, APS), for providing an APS function for the OSU frame. |
| BIAE | Backward incoming alignment signal error (backward incoming alignment error, BIAE), indicating whether an error exists in a backward alignment signal |
| RES | Reserved field, reserved for subsequent other function |
| TTI | Trail trace identifier (trail trace identifier, TTI), indicating a trail trace of the OSU frame |
| PT | Payload type (payload type, PT), indicating a type of a client signal carried in a service frame |
| CFS | Client signal fail (client signal fail, CFS) indication, where an indication signal is valid when a fault occurs on a carried service. |
| JC | Justification control (justification control, JC) overhead, used to carry mapping overhead information |
| MFAS | Multiframe indicator (multiframe alignment signal, MFAS), where for example, an MFAS field occupies 8 bits and is counted cyclically between 0 and 255. |
| DM | Delay measurement (delay measurement, DM), for carrying delay information |
| POH | Frame payload overhead (Payload overhead, POH), used to carry mapping overhead information |
| ADV | Accumulated delay value (accumulated delay value, ADV), used to record an accumulated delay value inside each node that an OSU path passes through |

In the example of FIG. 6, the frame header indication overhead field is located in the middle area of the overhead area 601. During actual application, a plurality of frame header indication overhead fields may alternatively be located at a start location of the overhead area 601. For example, a frame header indication 1 overhead field is located in a first byte of a first row, and a frame header indication 2 overhead field is located in a first byte of a second row. When a quantity of rows of the overhead area of the OSU frame is 4, and a quantity of the plurality of frame header indication overhead fields is 2, to improve efficiency of determining the start boundary of the OSU frame by the receiving device, the plurality of frame header indication overhead fields may be spaced by one row. For example, the frame header indication 1 overhead field is located in a first byte of a first row, and the frame header indication 2 overhead field is located in a first byte of a third row. Alternatively, the frame header indication 1 overhead field is located in a first byte of a second row, and the frame header indication 2 overhead field is located in a first byte of a fourth row.

During actual application, excessive frame header indication overhead fields also reduce transmission efficiency. To balance the OAM performance and the transmission efficiency, the quantity of the plurality of frame header indication overhead fields may be equal to the quantity of rows of the overhead area of the OSU frame or a multiple of the quantity of rows of the overhead area of the OSU frame. FIG. 7 is a schematic diagram of a second structure of an overhead area of an OSU frame according to an embodiment of this application. As shown in FIG. 7, the overhead area 701 of the OSU frame has a structure of four rows and a plurality of columns. The overhead area 701 of the OSU frame includes four frame header indication overhead fields (which are a frame header indication 1, a frame header indication 2, a frame header indication 3, and a frame header indication 4). The four frame header indication overhead fields are located in a middle area of the overhead area 701. A size of each frame header indication overhead field is 8 bits. In FIG. 7, a blank area is used to carry another overhead field.

During actual application, when the quantity of the plurality of frame header indication overhead fields is equal to an integer multiple of the quantity of rows of the overhead area, each row in the overhead area may include a same quantity of frame header indication overhead fields. For example, in FIG. 7, each row in the overhead area 701 includes one frame header indication overhead field. For another example, when the quantity of the plurality of frame header indication overhead fields is 8, and the quantity of rows of the overhead area is 2, each row in the overhead area 701 includes two frame header indication overhead fields.

It can be learned from the descriptions in FIG. 6 and FIG. 7 that the overhead area of the OSU frame may include a plurality of frame header indication overhead fields. To improve efficiency of determining the start boundary of the OSU frame by the receiving device, the plurality of frame header indication overhead fields may be different. During actual application, the plurality of frame header indication overhead fields may be completely different, or may be partially different. Descriptions are separately provided below.

In a first manner, the plurality of frame header indication overhead fields are completely different. For example, the quantity of the plurality of frame header indication overhead fields is 2. A frame header indication 1 overhead field includes 8 bits: 00000000 and a frame header indication 2 overhead field includes 8 bits: 11111111.

In a second manner, each of the plurality of frame header indication overhead fields includes a frame header indication identification field and a first field. FIG. 8 is a schematic diagram of a structure of a frame header indication overhead field according to an embodiment of this application. As shown in FIG. 8, a frame header indication overhead field 801 includes a frame header indication identification field and a first field. The receiving device determines a location of the frame header indication overhead field 801 by using the frame header indication identification field. For example, the frame header indication identification field includes 7 bits. A value of the 7 bits is 1111111. The first field represents a ranking of each frame header indication overhead field in the plurality of frame header indication overhead fields. For example, the first field includes 1 bit. A value of 1 bit of the frame header indication 1 overhead field is 0. "0" indicates that the frame header indication 1 overhead field is a first frame header indication overhead field in the plurality of frame header indication overhead fields. A value of 1 bit of the frame header indication 2 overhead field is 1. "1" indicates that the frame header indication 2 overhead field is a second frame header indication overhead field in the plurality of frame header indication overhead fields.

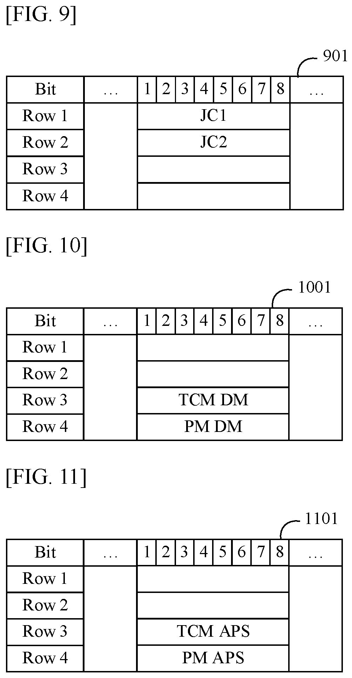

During actual application, the overhead area of the OSU frame may include a JC overhead field, used to carry mapping overhead information. In this embodiment of this application, to reduce a size of an overhead that needs to be transmitted, a size of the JC overhead field may be less than 4 bytes. When the JC overhead field includes a plurality of overhead fields, the size of the JC overhead field is a sum of sizes of the plurality of overhead fields. FIG. 9 is a schematic diagram of a third structure of an overhead area of an OSU frame according to an embodiment of this application. As shown in FIG. 9, the overhead area 901 of the OSU frame has a structure of four rows and a plurality of columns. The overhead area 901 of the OSU frame includes two JC overhead fields (which are JC1 and JC2). The JC1 overhead field is located in a first row. The JC2 overhead field is located in a second row. A size of each JC overhead field is 1 byte. In FIG. 9, a size of the JC overhead fields is 2 bytes.

It should be understood that the size of the JC overhead field is related to the size of the valid payload area of the OSU frame, a mapping granularity, or a compression degree of mapping overhead information. Therefore, to reduce the size of the JC overhead field, a sending device may reduce the size of the valid payload area of the OSU frame, or the sending device increases the mapping granularity, or the sending device compresses the mapping overhead information. For example, for mapping a constant bit rate (constant bit rate, CBR) service, the sending device may transfer an incremental change part of a Cm value of the constant bit rate service by using only the JC overhead field (where Cm represents an amount of service data that is carried in each frame and that uses m bits as a basic data unit). For another example, the size of the OSU frame is less than or equal to a size of the payload area of the OTN frame.

During actual application, the overhead area of the OSU frame may include a DM overhead field, used to carry delay information. To improve delay measurement precision, a size of the DM overhead field may be greater than or equal to 10 bits. For example, the size of the DM overhead field is 16 bits or 20 bits. When the DM overhead field includes a plurality of overhead fields, the size of the DM overhead field is a sum of sizes of the plurality of overhead fields. FIG. 10 is a schematic diagram of a fourth structure of an overhead area of an OSU frame according to an embodiment of this application. As shown in FIG. 10, the overhead area 1001 of the OSU frame has a structure of four rows and a plurality of columns. The overhead area 1001 of the OSU frame includes two DM overhead fields (which are TCM DM and PM DM whose sizes each are 1 byte), and there are a total of 2 bytes. The TCM DM overhead field is located in a third row. The PM DM overhead field is located in a fourth row.

During actual application, to increase a fault handling speed, the overhead area of the OSU frame may include both a PMAPS overhead field and a TCMAPS overhead field. FIG. 11 is a schematic diagram of a fifth structure of an overhead area of an OSU frame according to an embodiment of this application. As shown in FIG. 11, the overhead area 1101 of the OSU frame has a structure of four rows and a plurality of columns. The overhead area 1101 of the OSU frame includes a PM APS overhead field and a TCM APS overhead field. The TCM APS overhead field may be a TCM1 APS overhead field or a TCM2 APS overhead field. To further increase the fault handling speed, each OSU frame transmitted by the sending device may include a PMAPS overhead field and a TCM APS overhead field.

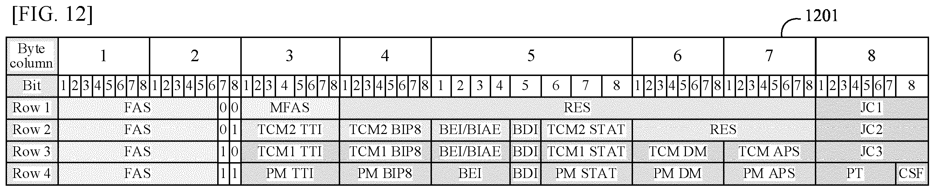

FIG. 12 is a schematic diagram of a sixth structure of an overhead area of an OSU frame according to an embodiment of this application. As shown in FIG. 12, the overhead area 1201 of the OSU frame has a structure of four rows and eight columns. A size of the overhead area 1201 is 4*8 bytes. The overhead area 1201 includes four frame header indication overhead fields. The four frame header indication overhead fields are located in a first column and a second column. Each frame header indication overhead field includes a frame header indication identification field and a first field. The frame header indication identification field may also be referred to as an FAS field. A size of each FAS field is 14 bits. A size of each first field is 2 bits. The overhead area 1201 further includes three JC overhead fields (which are JC1, JC2, and JC3). The three JC overhead fields are located in an eighth column. A size of each JC overhead field is 1 byte. The overhead area 1201 further includes two DM overhead fields (which are TCM DM and PM DM). The two DM overhead fields are located in a sixth column. A size of each DM overhead field is 1 byte. The overhead area 1201 further includes a PMAPS field and a TCM APS field. The PM APS field and the TCM APS field are located in a seventh column. A size of each APS field is 1 byte. In FIG. 12, BEI/BIAE represents a BEI overhead field or a BIAE overhead field. For specific descriptions of other fields, refer to FIG. 12 and Table 1. Details are not described herein again.

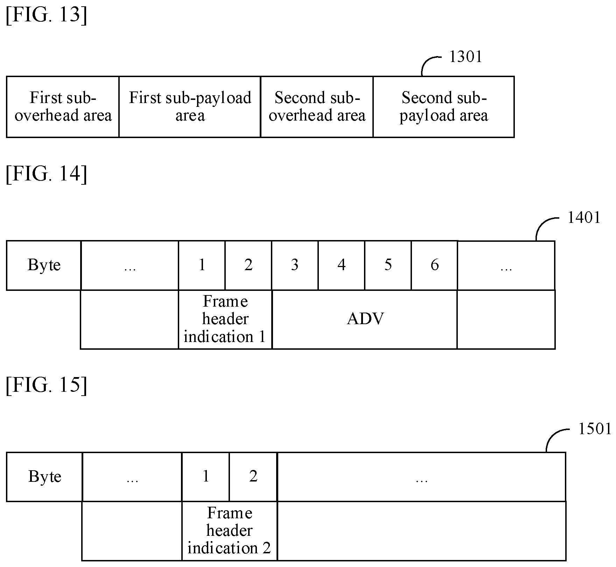

FIG. 13 is a schematic diagram of a third structure of an OSU frame according to an embodiment of this application. As shown in FIG. 13, an overhead area of the OSU frame 1301 includes a plurality of sub-overhead areas (which are a first sub-overhead area and a second sub-overhead area). A payload area of the OSU frame 1301 includes a plurality of sub-payload areas (which are a first sub-payload area and a second sub-payload area). A sub-overhead area in the plurality of sub-overhead areas and a sub-payload area in the plurality of sub-payload areas are alternately distributed. Each of the plurality of sub-overhead areas includes a target overhead field.

The target overhead field may include a frame header indication overhead field and/or an accumulated delay overhead field. The accumulated delay overhead field may also be referred to as an ADV overhead field. For descriptions of the ADV overhead field, refer to the descriptions in Table 1. When the target overhead field includes the frame header indication overhead field, each of the plurality of sub-overhead areas includes the frame header indication overhead field. When the target overhead field includes the accumulated delay overhead field, each of the plurality of sub-overhead areas includes the accumulated delay overhead field. When the target overhead field includes the frame header indication overhead field and the accumulated delay overhead field, each of the plurality of sub-overhead areas includes the frame header indication overhead field and the accumulated delay overhead field. The following provides descriptions by using an example in which the target overhead field includes the frame header indication overhead field.

FIG. 14 is a schematic diagram of a first structure of a first sub-overhead area according to an embodiment of this application. As shown in FIG. 14, the first sub-overhead area 1401 includes a frame header indication 1 overhead field and an ADV overhead field. A size of the frame header indication 1 overhead field is 2 bytes. A size of the ADV overhead field is 4 bytes. In FIG. 14, a blank area is used to carry another overhead field. Specific content and a size of the another overhead field are not limited in this embodiment of this application. For example, the another overhead field includes one or more overhead fields in Table 1. FIG. 15 is a schematic diagram of a first structure of a second sub-overhead area according to an embodiment of this application. As shown in FIG. 15, a second sub-overhead area 1501 includes a frame header indication 2 overhead field. A size of the frame header indication 2 overhead field is 2 bytes. In FIG. 15, a blank area is used to carry another overhead field. It should be understood that content of the frame header indication 2 overhead field and the frame header indication 1 overhead field may be completely different or partially different.

During actual application, to reduce complexity of processing the OSU frame by the receiving device, a size of each of the plurality of sub-overhead areas may be an integer multiple of 8 bytes or 16 bytes. Similarly, a size of a sub-payload area between any two adjacent sub-overhead areas in the plurality of sub-overhead areas may be an integer multiple of 8 bytes or 16 bytes. For example, in FIG. 13, a size of the first sub-payload area is 1888 bytes.

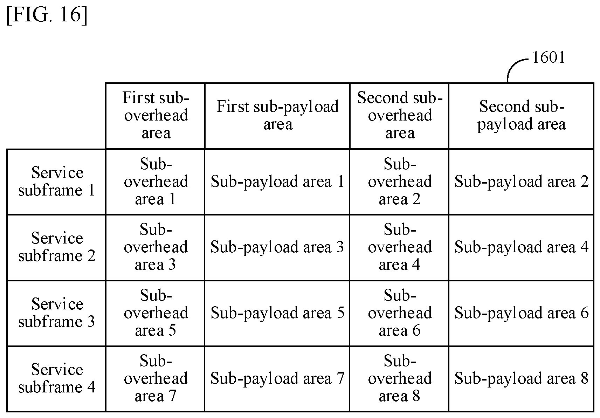

To improve efficiency of carrying data by using the service frame, the service frame may be a multiframe including N service subframes. N is an integer greater than 1. An example in which N is equal to 4 is used for description subsequently. FIG. 16 is a schematic diagram of a fourth structure of an OSU frame according to an embodiment of this application. As shown in FIG. 16, the OSU frame 1601 is a multiframe including four service subframes. The four service subframes are service subframes 1 to 4. The service subframe 1 includes a sub-overhead area 1, a sub-payload area 1, a sub-overhead area 2, and a sub-payload area 2. For descriptions of other service subframes, refer to the descriptions of the service subframe 1. The OSU frame 1601 includes a first sub-overhead area, a second sub-overhead area, a first sub-payload area, and a second sub-payload area. The first sub-overhead area includes a sub-overhead area 1, a sub-overhead area 3, a sub-overhead area 5, and a sub-overhead area 7. For descriptions of other sub-overhead areas or sub-payload areas, refer to the descriptions of the first sub-overhead area.

To further improve a frequency of transmitting the target overhead field, each sub-overhead area of the multiframe may include N target overhead fields. The N target overhead fields are in one-to-one correspondence with the N service subframes, that is, each service subframe includes one target overhead field in each sub-overhead area.

During actual application, to reduce complexity of processing the multiframe by the receiving device, a size of the multiframe may be 4*3824 bytes. A size of each service subframe is 3824 bytes. In this case, in FIG. 16, the OSU frame 1601 includes four rows and 3824 columns. The first sub-overhead area may be located in columns 1 to 16. A size of the first sub-overhead area is 4*16 bytes. The first sub-payload area may be located in columns 17 to 1904. A size of the first sub-payload area is 4*1888 bytes. The second sub-overhead area may be located in columns 1905 to 1920. A size of the second sub-overhead area is 4*16 bytes. The second sub-payload area may be located in columns 1921 to 3824. A size of the second sub-payload area is 4*1904 bytes. The following describes the first sub-overhead area and the second sub-overhead area whose sizes are 4*16 bytes.

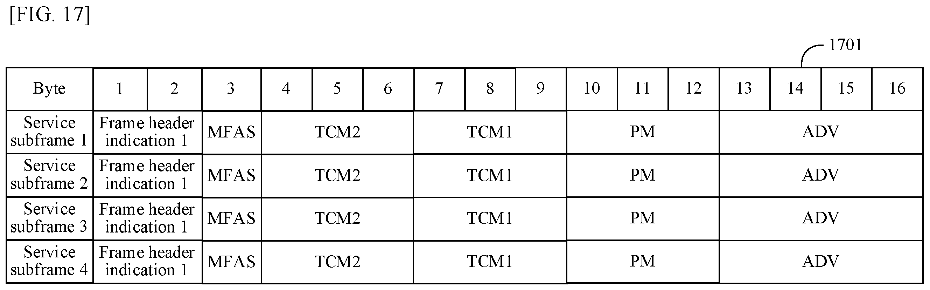

FIG. 17 is a schematic diagram of a second structure of a first sub-overhead area according to an embodiment of this application. As shown in FIG. 17, a size of the first sub-overhead area 1701 is 4*16 bytes. The first sub-overhead area 1701 includes four rows, and each row corresponds to a sub-overhead area of one service subframe. A size of a sub-overhead area of each service subframe is 16 bytes. The sub-overhead area of each service subframe includes a frame header indication 1 overhead field, an MFAS overhead field, a TCM2 overhead field, a TCM1 overhead field, a PM overhead field, and an ADV overhead field. The following describes each overhead field.

A size of the frame header indication 1 overhead field is 2 bytes. The frame header indication 1 overhead field may include a frame header indication identification field. A value of the frame header indication 1 overhead field may be 0xF628.

A size of the MFAS overhead field is 1 byte. The MFAS overhead field increases with a change of a service subframe, and a value of the MFAS overhead field ranges from 0 to 255. For example, in a service subframe 1, a value of the MFAS overhead field is 0. In a service subframe 2, a value of the MFAS overhead field is 1.

A size of the TCM2 overhead field is 3 bytes. The TCM2 overhead field includes a TTI overhead field, a BIP overhead field, a BEI overhead field, a BDI/BIAE overhead field, and/or a STAT overhead field. For example, the TCM2 overhead field includes a 1-byte TTI overhead field, a1-byte BIP overhead field, a 4-bit BEI overhead field, a 1-bit BDI/BIAE overhead field, and a 3-bit STAT overhead field.

A size of the TCM1 overhead field is 3 bytes. The TCM1 overhead field includes a TTI overhead field, a BIP overhead field, a BEI overhead field, a BDI/BIAE overhead field, and/or a STAT overhead field. For example, the TCM1 overhead field includes a 1-byte TTI overhead field, a 1-byte BIP overhead field, a 4-bit BEI overhead field, a 1-bit BDI/BIAE overhead field, and a 3-bit STAT overhead field.

A size of the PM overhead field is 3 bytes. The PM overhead field includes a TTI overhead field, a BIP overhead field, a BEI overhead field, a BDI/BIAE overhead field, and/or a STAT overhead field. For example, the PM overhead field includes a 1-byte TTI overhead field, a 1-byte BIP overhead field, a 4-bit BEI overhead field, a 1-bit BDI overhead field, and a 3-bit STAT overhead field.

A size of the ADV overhead field is 4 bytes. The ADV overhead field may use the frame header indication 1 overhead field as a reference point. The ADV overhead field is used by the receiving device to recover a service clock.

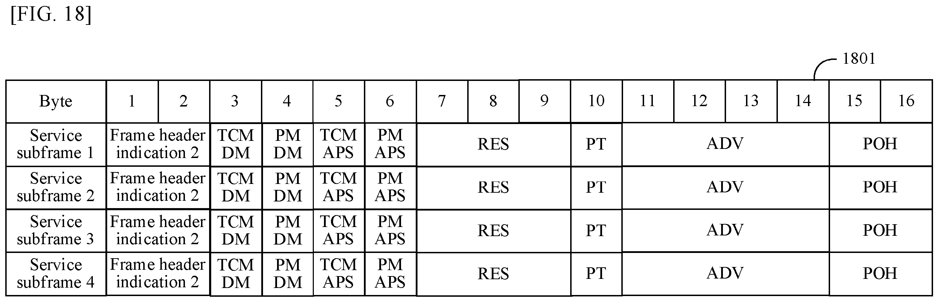

FIG. 18 is a schematic diagram of a second structure of a second sub-overhead area according to an embodiment of this application. As shown in FIG. 18, a size of the second sub-overhead area 1801 is 4*16 bytes. The second sub-overhead area 1801 includes four rows, and each row corresponds to a sub-overhead area of one service subframe. A size of a sub-overhead area of each service subframe is 16 bytes. The sub-overhead area of each service subframe includes a frame header indication 2 overhead field, a TCM DM overhead field, a PM DM overhead field, a TCM APS overhead field, a PM APS overhead field, a RES overhead field, a PT overhead field, an ADV overhead field, and a POH overhead field. The following describes each overhead field.

A size of the frame header indication 2 overhead field is 2 bytes. The frame header indication 2 overhead field may be different from the frame header indication 1 overhead field. For example, a value of the frame header indication 2 overhead field may be a reverse value of 0xF628. Different values of the frame header indication 2 overhead field and the frame header indication 1 overhead field represent rankings of the frame header indication 2 overhead field and the frame header indication 1 overhead field in each service subframe.

Sizes of the TCM DM overhead field, the PM DM overhead field, the TCM APS overhead field, and the PM APS overhead field each may be 1 byte. A size of the RES overhead field is 3 bytes. A size of the PT overhead field is 1 byte. A size of the ADV overhead field is 4 bytes. The ADV overhead field may use the frame header indication 2 overhead field as a reference point. A size of the POH overhead field is 2 bytes. It should be understood that for descriptions of each overhead field in FIG. 17 and FIG. 18, refer to the descriptions in Table 1.

It should be understood that FIG. 13 and FIG. 16 are merely two examples of the OSU frame provided in embodiments of this application. During actual application, a person skilled in the art may adaptively modify a structure of the OSU frame based on a requirement. For example, the OSU frame includes three sub-overhead areas and two sub-payload areas. It should be understood that the OSU frame described in FIG. 13 to FIG. 18 has a similar part to the OSU frame described in FIG. 4 to FIG. 12. Therefore, for descriptions of the OSU frame in FIG. 13 to FIG. 18, refer to the descriptions of the OSU frame in FIG. 4 to FIG. 12. For example, in FIG. 13, a plurality of sub-payload areas include a valid payload area. A size of the valid payload area is less than or equal to a size of the plurality of sub-payload areas. The valid payload area is used to carry a plurality of coding blocks. A size of the plurality of coding blocks is equal to the size of the valid payload area. For another example, the plurality of sub-payload areas further include a padding payload area. The padding payload area is used to pad unwanted data. A sum of sizes of the padding payload area and the valid payload area is equal to the size of the plurality of sub-payload areas.

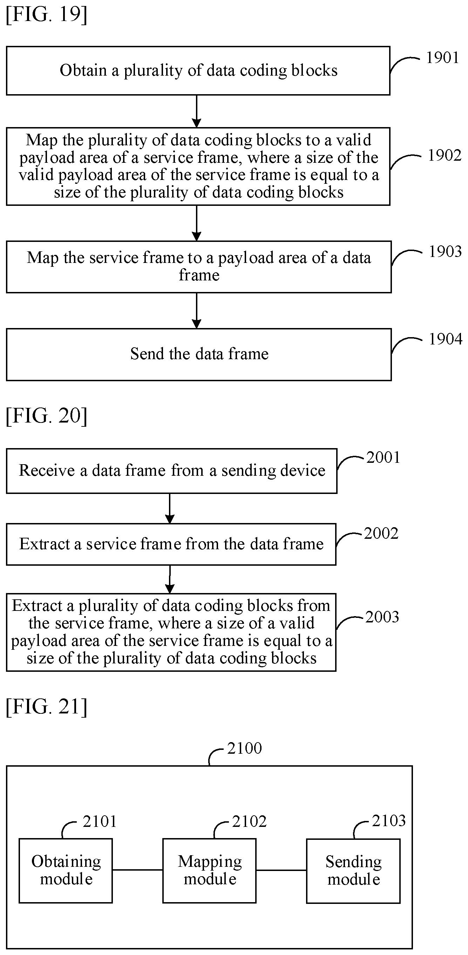

The foregoing describes the OSU frame provided in embodiments of this application, and the following describes a data mapping method and a data demapping method provided in embodiments of this application. FIG. 19 is a schematic flowchart of a data mapping method according to an embodiment of this application. As shown in FIG. 19, the data mapping method includes the following steps.

1901: A sending device obtains a plurality of data coding blocks.

The sending device may be an OTN device, an MTN device, or the like. The sending device generates the plurality of data coding blocks, or the sending device receives the plurality of data coding blocks from another device. A size of each of the plurality of data coding blocks is not limited in this embodiment of this application. For example, the size of each data coding block may be 66 bits or 257 bits.

1902: The sending device maps the plurality of data coding blocks to a valid payload area of a service frame. A size of the valid payload area of the service frame is equal to a size of the plurality of data coding blocks.

The service frame may be an OSU frame or another data frame whose structure is similar to a structure of the OSU frame. The size of the valid payload area of the service frame may be less than or equal to a size of a payload area of the service frame. When the size of the valid payload area of the service frame is less than the size of the payload area of the service frame, the payload area of the service frame further includes a padding payload area. The padding payload area is used to pad unwanted data. The size of the valid payload area of the service frame is equal to the size of the plurality of data coding blocks. It should be understood that for descriptions of the service frame, refer to the descriptions in any one of FIG. 4 to FIG. 18.

1903: The sending device maps the service frame to a payload area of a data frame.

The data frame may be an OTN frame, a FlexE frame, an MTN frame, or the like. When the data frame is the OTN frame, the data frame may have a structure of four rows and 3824 columns. The data frame may further include an overhead area. For example, a size of the overhead area of the data frame is 4*16 bytes. A size of the payload area of the data frame is 4*3808 bytes. For more descriptions of step 1903, refer to FIG. 3.

1904: The sending device sends the data frame.

The sending device sends the data frame to a receiving device. The receiving device may be another OTN device or another MTN device. The sending device and the receiving device are connected through an optical fiber. After obtaining the data frame, the sending device may modulate the data frame onto an optical carrier, to obtain an optical signal. The sending device sends the optical signal to the receiving device through the optical fiber.

FIG. 20 is a schematic flowchart of a data demapping method according to an embodiment of this application. As shown in FIG. 20, the data demapping method includes the following steps.

Step 2001: A receiving device receives a data frame from a sending device.

The receiving device may be an OTN device or an MTN device. The receiving device and the sending device are connected through an optical fiber. The receiving device receives an optical signal from the sending device through the optical fiber. The receiving device obtains the data frame by demodulating the optical signal.

Step 2002: The receiving device extracts a service frame from the data frame.

The data frame includes an overhead area and a payload area. For example, a size of the overhead area of the data frame is 4*16 bytes. A size of the payload area of the data frame is 4*3808 bytes. The payload area of the data frame includes one or more service frames. The service frame may be an OSU frame or another data frame whose structure is similar to a structure of the OSU frame.

Step 2003: The receiving device extracts a plurality of data coding blocks from the service frame. A size of a valid payload area of the service frame is equal to a size of the plurality of data coding blocks.

The valid payload area of the service frame includes the plurality of data coding blocks. The size of the valid payload area of the service frame is equal to the size of the plurality of data coding blocks. A size of each of the plurality of data coding blocks is not limited in this embodiment of this application, for example, the size of each data coding block may be 66 bits or 257 bits. The size of the valid payload area of the service frame may be less than or equal to a size of a payload area of the service frame. When the size of the valid payload area of the service frame is less than the size of the payload area of the service frame, the payload area of the service frame further includes a padding payload area. The padding payload area is used to pad unwanted data.

It should be understood that descriptions of the data demapping method have a similar part to the descriptions of the data mapping method and the service frame. Therefore, for the descriptions of the data demapping method, refer to the descriptions in any one of FIG. 4 to FIG. 18. For example, an overhead area of the service frame includes a plurality of different frame header indication overhead fields. The receiving device determines a start boundary of the service frame based on the plurality of frame header indication overhead fields. For another example, the overhead area of the service frame includes a DM overhead field. A size of the DM overhead field is 8 bits. The receiving device determines a delay between the receiving device and the sending device based on the DM overhead field.

FIG. 21 is a schematic diagram of a structure of a sending device according to an embodiment of this application. As shown in FIG. 21, a sending device 2100 includes an obtaining module 2101, a mapping module 2102, and a sending module 2103. The obtaining module 2101 is configured to obtain a plurality of data coding blocks. The mapping module 2102 is configured to map the plurality of data coding blocks to a valid payload area of a data frame. The sending module 2103 is configured to send the data frame. A size of the plurality of data coding blocks is equal to a size of the valid payload area of the data frame.

It should be understood that descriptions of the sending device 2100 have a similar part to the descriptions of the data mapping method and the service frame. Therefore, for descriptions of the service frame in the sending device 2100, refer to the descriptions in any one of FIG. 4 to FIG. 18. For descriptions of a step performed by each module in the sending device 2100, refer to the descriptions in FIG. 19. For example, a size of each of the plurality of data coding blocks is 66 bits. For another example, an overhead area of the service frame includes a plurality of different frame header indication overhead fields.

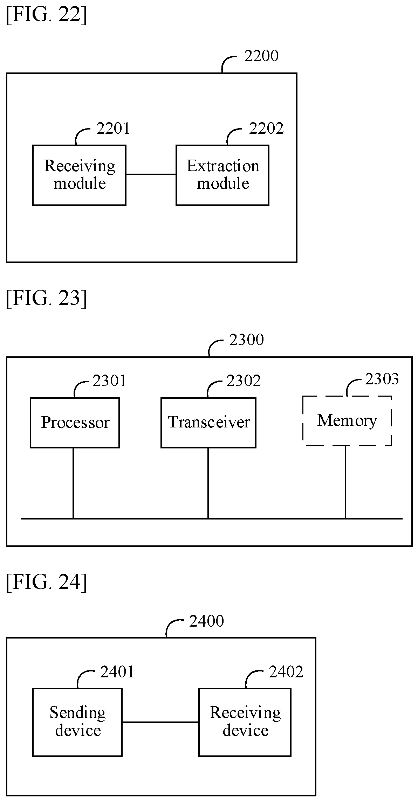

FIG. 22 is a schematic diagram of a structure of a receiving device according to an embodiment of this application. As shown in FIG. 22, a receiving device 2200 includes a receiving module 2201 and an extraction module 2202. The receiving module 2201 is configured to receive a data frame from a sending device. The extraction module 2202 is configured to extract a service frame from a payload area of the data frame. The extraction module 2202 may be further configured to extract a plurality of data coding blocks from a valid payload area of the data frame. A size of the plurality of data coding blocks is equal to a size of the valid payload area of the data frame.

It should be understood that descriptions of the receiving device 2200 have a similar part to the descriptions of the data demapping method and the service frame. Therefore, for descriptions of the service frame in the receiving device 2200, refer to the descriptions in any one of FIG. 4 to FIG. 18. For descriptions of a step performed by each module in the receiving device 2200, refer to the descriptions in FIG. 20. For example, the receiving device 2200 further includes a processing module. An overhead area of the service frame includes a plurality of different frame header indication overhead fields. The processing module is further configured to determine a start boundary of the service frame based on the plurality of frame header indication overhead fields. For another example, the overhead area of the service frame includes a DM overhead field whose size is 8 bits. The processing module is configured to determine a delay between the receiving device 2200 and the sending device based on the DM overhead field.

FIG. 23 is a schematic diagram of a structure of a communication device according to an embodiment of this application. The communication device may be a sending device or a receiving device. As shown in FIG. 23, a communication device 2300 includes a processor 2301 and a transceiver 2302. The processor 2301 may be a central processing unit (central processing unit, CPU), a network processor (network processor, NP), or a combination of a CPU and an NP. The processor 2301 may further include a hardware chip or another general-purpose processor. The foregoing hardware chip may be an application specific integrated circuit (application specific integrated circuit, ASIC), a programmable logic device (programmable logic device, PLD), or a combination thereof. The transceiver 2302 may be an optical transceiver.

When the communication device 2300 is the sending device, the processor 2301 is configured to obtain a plurality of data coding blocks. The processor 2301 is further configured to map the plurality of data coding blocks to a valid payload area of a data frame. A size of the plurality of data coding blocks is equal to a size of the valid payload area of the data frame. The transceiver 2302 is configured to send the data frame.

When the communication device 2300 is the receiving device, the transceiver 2302 is configured to receive a data frame from a sending device. The processor 2301 is configured to extract a service frame from a payload area of the data frame. The processor 2301 may be further configured to extract a plurality of data coding blocks from a valid payload area of the data frame. A size of the plurality of data coding blocks is equal to a size of the valid payload area of the data frame.

In another embodiment, the communication device 2300 may further include a memory 2303. The memory 2303 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory 1703 may be configured to store a data frame, a service frame, or another code used to control and manage a device.

Therefore, for descriptions of the service frame in the communication device 2300, refer to the descriptions of the service frame in any one of FIG. 4 to FIG. 18. When the communication device 2300 is the sending device, for descriptions of the steps performed by the communication device 2300, refer to the descriptions of the sending device in FIG. 19 or FIG. 21. When the communication device 2300 is the receiving device, for descriptions of the steps performed by the communication device 2300, refer to the descriptions of the receiving device in FIG. 20 or FIG. 22.

This application further provides a communication system. FIG. 24 is a schematic diagram of a structure of a communication system according to an embodiment of this application. As shown in FIG. 24, a communication system 2400 includes a sending device 2401 and a receiving device 2402. The sending device 2401 is configured to obtain a plurality of data coding blocks, and map the plurality of data coding blocks to a valid payload area of a data frame. A size of the plurality of data coding blocks is equal to a size of the valid payload area of the data frame. The sending device 2401 is further configured to send the data frame. The receiving device 2402 is configured to receive the data frame from the sending device and extract a service frame from a payload area of the data frame. The receiving device 2402 may be further configured to extract the plurality of data coding blocks from the valid payload area of the data frame.

Therefore, for descriptions of the service frame in the communication system 2400, refer to the descriptions of the service frame in any one of FIG. 4 to FIG. 18. For descriptions of steps performed by the sending device 2401, refer to the descriptions of the data mapping method in FIG. 19. For descriptions of steps performed by the receiving device 2402, refer to the descriptions of the data demapping method in FIG. 20.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data mapping method, comprising:
obtaining, by a sending device, a plurality of data coding blocks;
mapping, by the sending device, the plurality of data coding blocks to a valid payload area of a service frame, wherein a size of the valid payload area of the service frame is equal to a size of the plurality of data coding blocks;
mapping, by the sending device, the service frame to a payload area of a data frame; and
sending, by the sending device, the data frame.

2. The data mapping method according to claim 1, wherein a size of the service frame is an integer multiple of 16 bytes.

3. The data mapping method according to claim 1 or 2, wherein the size of the valid payload area of the service frame is an integer multiple of 16 bytes, and a size of an overhead area of the service frame is an integer multiple of 16 bytes.

4. The data mapping method according to any one of claims 1 to 3, wherein a size of each of the plurality of data coding blocks is 66 bits.

5. The data mapping method according to claim 4, wherein the size of the service frame is 4*1064 bytes, the size of the valid payload area of the service frame is 4*1056 bytes, and the size of the overhead area of the service frame is 4*8 bytes.

6. The data mapping method according to claim 4, wherein the size of the service frame is 4*1328 bytes, the size of the valid payload area of the service frame is 4*1320 bytes, and the size of the overhead area of the service frame is 4*8 bytes.

7. The data mapping method according to any one of claims 1 to 3, wherein a size of each of the M data coding blocks is 257 bits.

8. The data mapping method according to claim 7, wherein the size of the service frame is 4*1036 bytes, the size of the valid payload area of the service frame is 4*1028 bytes, and the size of the overhead area of the service frame is 4*8 bytes.

9. The data mapping method according to claim 7, wherein the size of the service frame is 4*1293 bytes, the size of the valid payload area of the service frame is 4*1258 bytes, and the size of the overhead area of the service frame is 4*8 bytes.

10. The data mapping method according to any one of claims 1 to 9, wherein the overhead area of the service frame comprises a plurality of different frame header indication overhead fields.

11. The data mapping method according to claim 10, wherein each of the plurality of frame header indication overhead fields comprises a frame header indication identification field and a first field, and the first field represents a ranking of each frame header indication overhead field in the plurality of frame header indication overhead fields.

12. The data mapping method according to claim 10 or 11, wherein a quantity of the plurality of frame header indication overhead fields is a quantity of rows of the overhead area of the service frame.

13. The data mapping method according to any one of claims 1 to 12, wherein the overhead area of the service frame comprises a delay measurement DM overhead field, and a size of the DM overhead field is 16 bits.

14. The data mapping method according to any one of claims 1 to 13, wherein the overhead area of the service frame comprises a justification control JC overhead field, and a size of the JC overhead field is less than 4 bytes.

15. The data mapping method according to any one of claims 1 to 14, wherein the overhead area of the service frame comprises a path monitoring automatic protection switching PM APS overhead field and a tandem connection monitoring TCMAPS overhead field.

16. The data mapping method according to any one of claims 1 to 4 and 7, wherein the overhead area of the service frame comprises a plurality of sub-overhead areas, a payload area of the service frame comprises a plurality of sub-payload areas, a sub-overhead area in the plurality of sub-overhead areas and a sub-payload area in the plurality of sub-payload areas are alternately distributed, and each of the plurality of sub-overhead areas comprises a target overhead field.

17. The data mapping method according to claim 16, wherein the target overhead field comprises a frame header indication overhead field and/or an accumulated delay overhead field.

18. The data mapping method according to claim 16 or 17, wherein a size of a sub-payload area between any two adjacent sub-overhead areas in the plurality of sub-overhead areas is an integer multiple of 8 bytes or 16 bytes.

19. The data mapping method according to any one of claims 16 to 18, wherein the service frame is a multiframe comprising N service subframes, and N is an integer greater than 1.

20. The data mapping method according to claim 19, wherein N is 4, and a size of the N service subframes is 4*3824 bytes.

21. A data demapping method, comprising:
receiving, by a receiving device, a data frame from a sending device;
extracting, by the receiving device, a service frame from a payload area of the data frame; and
extracting, by the receiving device, a plurality of data coding blocks from a valid payload area of the service frame, wherein a size of the valid payload area of the service frame is equal to a size of the plurality of data coding blocks.

22. The data demapping method according to claim 21, wherein an overhead area of the service frame comprises a plurality of different frame header indication overhead fields, and the method further comprises:
determining, by the receiving device, a start boundary of the service frame based on the plurality of frame header indication overhead fields.

23. The data demapping method according to claim 21 or 22, wherein the overhead area of the service frame comprises a delay measurement DM overhead field, a size of the DM overhead field is 16 bits, and the method further comprises:
determining, by the receiving device, a delay between the receiving device and the sending device based on the DM overhead field.

24. A sending device, comprising an obtaining module, a mapping module, and a sending module, wherein
the obtaining module is configured to obtain a plurality of data coding blocks;
the mapping module is configured to perform the method according to any one of claims 1 to 20, to obtain a data frame based on the plurality of data coding blocks; and
the sending module is configured to send the data frame.

25. A receiving device, comprising a receiving module and an extraction module, wherein
the receiving module is configured to receive a data frame from a sending device; and
the extraction module is configured to perform the method according to any one of claims 21 to 23, to obtain a plurality of data coding blocks based on the data frame.

26. A sending device, comprising a processor and a transceiver, wherein
the processor is configured to perform the method according to any one of claims 1 to 20, to obtain a data frame; and
the transceiver is configured to send the data frame.

27. A receiving device, comprising a processor and a transceiver, wherein
the transceiver is configured to receive a data frame; and
the processor is configured to perform the method according to any one of claims 21 to 23, to obtain a plurality of data coding blocks based on the data frame.
